# EUROPEAN PATENT SPECIFICATION

(11) **EP 2 509 433 B1**
(45) Date of publication and mention of the grant of the patent: **07.08.2013**
(21) Application number: 10776388.0
(22) Date of filing: 17.11.2010
(51) Int. Cl.: A23F 3/42, A23L 1/221

(54) **A PROCESS FOR THE RECOVERY OF VOLATILE AROMA COMPOUNDS FROM VEGETABLE MATERIAL**
VERFAHREN ZUR WIEDERGEWINNUNG VON FLÜCHTIGEN AROMAVERBINDUNGEN AUS PFLANZLICHEM MATERIAL
PROCÉDÉ POUR LA RÉCUPÉRATION DE COMPOSÉS AROMATIQUES VOLATILS À PARTIR DE MATIÈRES VÉGÉTALES

(30) Priority: 07.12.2009 IN MU28212009; 17.02.2010 EP 10153769
(43) Date of publication of application: 17.10.2012
(73) Proprietor: Unilever NV, 3013 AL Rotterdam (NL); Unilever PLC, London EC4Y 0DY (GB)
(72) Inventor: KACKER, Rohit, Bangalore 560 066 (IN); SINGH, Gurmeet, Bangalore 560 066 (IN); GUPTA, Anshul, Bangalore 560 066 (IN)
(74) Representative: Clarke, Christopher John
(86) International application number: PCT/EP2010/067676
(87) International publication number: WO 2011/069788

(56) References cited:
- WO-A1-2007/039018
- DE-A1- 19 826 143
- US-A- 2 156 212
- US-A- 3 615 665
- US-A- 4 335 150
- US-A1- 2007 003 683
- KARLSSON H: "Aroma recovering during beverage processing", JOURNAL OF FOOD ENGINEERING, BARKING, ESSEX, GB LNKD- DOI:10.1016/S0260-8774(97)00081-2, vol. 34, no. 2, 1 January 1997 (1997-01-01), pages 159-178, XP002112611, ISSN: 0260-8774
- DATABASE WPI Section Ch, Week 198629 Thomson Scientific, London, GB; Class D13, AN 1986-186363 XP002585753, & JP 61 119140 A 6 June 1986 (1986-06-06)

## Description

### TECHNICAL FIELD

The present invention relates to a process for the recovery of volatile aroma compounds from vegetable material. It particularly relates to the process of recovery of volatile aroma compounds from tea.

### BACKGROUND

Recovering volatile aroma compounds during processing of vegetable materials is known.

JP2005087122 A2 (SHOWA NOUGEI KK, published in 2005) discloses a production method for the coffee flavor comprising a process of bringing roasted coffee beans into contact with water vapor to extract in water vapor flavor components of the coffee beans, a process of obtaining condensate containing the flavor components through condensing the water vapor by cooling, and a process of re-extracting the obtained condensate with fatty acid ester of glycerol, preferably triacetin (glyceryl triacetate). Such methods require a further separate subsequent step of drying the vegetable material leading to additional energy consumption and complexity of process. Even when the vegetable material is further dried, the dried vegetable material lacks usual aroma/taste and visual characteristics.

US3615665 A (WHITE WILLIAM V, published in 1971) also discloses a process for stripping and recovering volatile compounds from roasted coffee wherein coffee beans are contacted with steam.

US2007/003683 A1 (INOUE TAKASHI et al, published in 2007) discloses a method of extracting volatile compounds from food such as tea, coffee by contacting food material with steam and recovering the liberated volatile compounds by cooling.

It is known to contact aroma-laden air obtained during drying of vegetable materials with water or some other aroma dissolution liquid. JP2005021040 A2 (RIVEN PERFUMERY KK, published in 2005) discloses a method for producing a tea extract comprising: leading roasting aroma generated via roasting to the outside of a hermetically sealed heating vessel, and capturing the aroma into water to efficiently collect the aroma, and using the aroma solution as a whole amount or a part of an extract solvent, or adding the solution to extracted liquid separately extracted using water to obtain the tea extract rich in roasting aroma.

US4335150 A (HOSAKA HIDEKAI et al, published in 1982) discloses a process for drying food by using a drying gas such as air or nitrogen. The used gas may be further applied in process such as being used a purge as which is contacted with adsorbed water. There is no disclosure of contacting the purge gas with water vapour or steam.

US5214998 A (NAGAOKA PERFUMERY CO LTD, published in 1993) discloses a process wherein a food material which is hermetically accommodated in a heating unit is heated and a generated aroma component is delivered by a carrier gas supply unit together with a carrier gas through connection pipe to an aroma component dissolving and capturing unit including a hermetically sealed container in which an aroma dissolving solution is stored. In such a process, the recovery of aroma per unit mass of dried material is relatively low. Furthermore, the concentration of aroma compounds obtained in dissolving solution is relatively low.

W02007/039018 (Unilever) describes a process of manufacturing a leaf tea product comprising the steps of recovering aroma from the tea leaf followed by drying the tea leaf, characterized in that aroma recovery is whilst at least partially drying the fresh leaf in a low convection dryer. Such a process requires special equipment and can not be used in conventional drying processes.

One of the objects of the present invention is to overcome or ameliorate at least one of the disadvantages of the prior art, or to provide a useful alternative.

Another object of the present invention is to provide a process of recovering volatile aroma compounds from vegetable material without compromising the quality of the dried vegetable material.

Yet another object of the present invention is to provide a process of recovering volatile aroma compounds from vegetable material that provides relatively higher recovery of volatile aroma compounds per unit mass of vegetable material on dry basis.

Yet another object of the present invention is to provide a process of recovering volatile aroma compounds from vegetable material with the concentration of volatile aroma compounds in the condensate being relatively high

Yet another object of the present invention is to provide a process of recovering volatile compounds from vegetable material with relatively low energy consumption.

Present inventors have surprisingly found that injecting steam into the dryer exhaust gases emerging from a vegetable dryer before condensation provides relatively high recovery of aroma

### SUMMARY OF THE INVENTION

According to the present invention there is provided a process for the recovery of volatile aroma compounds from a vegetable material comprising the steps of:
a. Contacting the vegetable material with a gas in a dryer wherein the amount of moisture in the gas entering the dryer is less than 15 g/kg dry gas;
b. Contacting the dryer exhaust gas stream with water vapour or steam which comprises at least 50% evaporated water by mass to obtain a gaseous mixture, wherein the temperature of the water vapour or steam is from 95°C to 120°C and;
c. Condensing the gaseous mixture to recover a condensate comprising volatile aroma compounds.

### DETAILED DESCRIPTION OF THE INVENTION

### The vegetable material

The term vegetable material as used herein means material obtained from plants. Vegetable material may be obtained from root, stem, leaf, seed, flower or any other part of the plant. Preferably the vegetable material includes volatile aroma compounds.

Vegetable material is preferably obtained from the group of plants including medicinal plants, spices, horticulture crops including fruits and vegetables, flower crops, plantation crops, aromatic crops, root, tuber and blulbous crops.

Preferred spice plants include *Alpinia galanga*/*, Amomum subla tum, Capsicum annum, Capsicum fruitenscens, Cinnamomum aromaticum, Cinnamomum* tama/a, *Cinnamomum zeylancium, Curcuma* /*onga, Elettaria cardamomum, Garcinia cambogia, Garcinia indica, Murraya koenigi, Myristica fragrans, Pimenta diocia, Piper nigrum, Sysygium aromaticum, Tamarindus indica, Vanilla planfolia, Vanilla fragrans, Zinziber officina*/*is, Coraindrum sativum, Cuminum cyminum, Cuminium odorum, Foenciulum vulgare, Carum copticum, Anetheum graveolens, Tigonella foenum-graecum, Nigella sativa, Pimipnella anisum,* and *Apium graveo*/*ens.* Particularly preferred spices include *Capsicum annum, Capsicum fruitenscens, Cinnamomum aromaticum, Cinnamomum tamala, Cinnamomum zey*/*ancium, Curcuma* /onga, *E*/*ettaria cardamomum, Vanilla fragrans, Zinziber officinalis, Coraindrum sativum,* and *Cuminum cyminum.,*

Preferred fruits include *Fragaria vesca, Mangifera indica, Carica papaya, Vitis vinifera, Punica gargantum, Psidium guajava, Citrus limon, Citrus, aurantifolia, Citrus latifolia, Mnilakara zapota, Achras sapota, Persea Americana, Passiflora edulis, Litchi chinensis, Annona reticulate, Artocarpus heterophyllus, Ziziphus mauritiana, Emblica officinalis, Phyllanthus emblica, Ficus carica, Carissa carandas, Aegle marmelos, Artocarpus incise, Averrhoa carambola, Prunus avium, Phoneix dactylifera, Syzygium cuminiim Eriobotrya japonica, Vassila latifolia, Garcinia mangostana, Grewia subinequalis, Nephelium lappaceeum, Ananas comosus, Syzigium jambos, Feronia limonia, Malus domestica, Pyres communis, Prunus persica, Prunus amygdalus, Prunus armeniaca, Juglans regia,* and *Actinidia chinensi.* Particularly preferred fruits include *Citrus limon, Citrus, aurantifolia, Citrus latifolia, Fragaria vesca,* and *Ananas comosus*

Preferred vegetables include cucurbits, crucifers and temperate vegetables, leguminous and leafy vegetables.

Preferred cucurbits include Momordica charantia, Cucurbita moschata, Cucurbita pepo, Lagenaria siceraria, Cucumis melo, Citrulus lanatus, Benincasa hispida, Cucumis sativus, Cucumis melo var. utilissimus, Coccinia indica, Luffa acutangula, Luffa cylindricale, Praecitrullus fistulosus, Trichosanthes cucurmerina, Cucurmis melo var. momordica, Cucumis callosus.

Preferred crucifers and temperate vegetable plants include *Brassica oleracea subsp. Capitata, Brassica oleracea L. var botrytis, Brassica oleracea var. Itaiica, Brasssica oleracea var. gongylodes, Daucus carota, Beta vulgaris, Raphanus sativus, Brassica oleracea var. bengalensis, Lactuca sativa, Beta vulgaris var. bengalensis, Petroselinum hortense, Lycopersicon esculentum, Solanum melongena, Abelmoschus esculentus,* and *Spinaceae oleracea.* Particularly preferred crucifers and temperate vegetable plants include *Brassica oleracea subsp. Capitata, Brassica oleracea L. var botrytis, Brassica oleracea var. Italica, Brasssica oleracea var. gongylodes,* and *Daucus carota.*

Preferred leguminous and leafy vegetables include *Phaseolus vugarsis, Vigna unguiculata, Dolichos lablab, Pisum sativum, Cyamopsis tetragonolobus, Moringa oleifera, Sesbania grandiflora,* and *Petroselinum crispum.* Particularly preferred leafy vegetable is *Petroselinum crispum.*

Preferred tuber and bulbous crops include *Solanum tuberosum, Manihot esculenta, lpomoea batatas, Dioscorea alata, Dioscorea esculenta, Dioscorea rotundata, Amorphophallus paeoniifolius, Pachyrrhizus erosus, Gallium cepa, Allium sativum,* and *Maranta arundinaceae.* Particularly preferred tuber and bulbous crops include *Allium cepa* and *Allium sativum.*

Preferred flower crops include *Polianthes tuberose, Dianthus cayophyllus, Callistepheus chinensis,* and *Cymbidicum dendrobium.*

Preferred plantation crops include *Cocos nucifera, Areca catechu, Theobroma cacao, Anacardium occidentale, Camelia sinensis, Coffea Arabica, Coffea robusta, Hevia brasilensis, Elacis guineensis, Cichorium intybus,* and *Borassus flabellifer.* Particularly preferred plantation crops include *Cocos nucifera, Camelia sinensis, Coffea Arabica, and Coffea robusta. Camelia sinensis* is the most preferred plantation crop.

Preferred aromatic crops include Cymbologon flexuosus, Cymbopogon martini var. motia, Mentha spicata, Pelargonium graveolens, Valeriana jatamansi, Artemisia pallens, Cympopogon winterianus, Mentha arvensis, Pogostemon patchouli, and Vetiveria zizanioides.

Preferred medicinal plants include *Papaver sominferum, Chlorophytum borivilianum, Dioscoria floribunda, Digitalis lanata, Glaucium flavum, Glycyrrhiza glabra, Rauvolfia serpentine, Solanum laciantum, Solanum viarum, Piper betle, Hyoscyamus muticus, Ahelmoschus moschatus, Acorus calamus, Adhatoda zeylanica, Aloe barbadensis, Alpinia calcarata, Azardichta indica, Caesalpinia sappan, Cassia angustifolia, Curcuma zerumbet, Catharanthus roseus, Croton tiglium, Curcuma angustifolia, Ficus benghalensis, Ficus religiosa, Gloriosa superba, Indigofera tinctoria, Inula racemosa, Jatropha curcas, Kemfaria galangal, Lawsonia inermis, Lepidium sativum, Ocimum basilicum, Ocimum sanctum, Ocimum tenuiflorum, Piper longum, Plantago ovata, Plechtranthus barbatus, Pongamia pinata, Sylibum marianum, simmondsia chinensis, Trachyspermum ammi, Vitex negundo, Withania somnifera* and *Zizyphus jujube.* Particularly preferred medicinal plants include *Ocimum basilicum, Ocimum sanctum,* and *Ocimum tenuiflorum.*

It is particularly further preferred that the vegetable material is derived from the the group of plants consisting of tea (*Camellia sinensis*)*,* basil (*Ocimum basilicum, Ocimum sanctum, Ocimum tenuiflorum*), parsley (*Petroselinum crispum*)*,* capsicum and chillies (Capsicum annum, Capsicum fruitenscens), carrot (*Daucus carota*), asparagus (*Asparagus Racemosus*), broccoli *(Brassica oleracea var. Italica*), cinnamom (*Cinnamomum aromaticum, Cinnamomum tamala, Cinnamomum zeylancium)* Curcumin (*Curcuma longa*), Cardamomd (*Elettaria caralamomum*), Vanilla (*Vanilla fragrans*), ginger (*Zinziber officinalis*), Coriander (*Coraindrum sativum*), strawberry (*Fragaria vesca), Allium cepa* (*onion*),*Allium sativum* (garlic) and *Cuminum cyminum.*

Comminuted or uncomminuted vegetable material may be used. Comminuted vegetable material is preferred.

According to one aspect of the invention, vegetable material from a tea plant is preferred. Vegetable material from a tea plant may be fresh tea leaf, green tea, black tea, oolong tea. Any fermented or unfermented or partially fermented tea material may be used. However, it is particularly preferred that the tea material is at least partially fermented tea leaf.

The vegetable material comprises from about 0.1 to 10 kg, more preferably from 0.5 to 5 kg, and most preferably from 1 to 4 kg moisture per kg dry weight of the vegetable material.

The term "volatile aroma compounds" as used herein means the organic compounds in the vegetable material that are separated from the vegetable material when the vegetable material is heated to temperature greater than 30 °C at normal atmospheric pressure.

Total volatile organic carbon content of the vegetable material is typically indicative of the amount of volatile aroma compounds in a vegetable material, and such total volatile organic carbon content of the vegetable material may be determined by any suitable method known in the art. Preferably, the total volatile organic carbon content is measured by exposing the vegetable material to temperature of 90 °C at vacuum of less than or equal to 200 mm Hg, and condensing the vapours generated to obtain a condensate which include a mixture of volatile aroma compounds and water. The condensate is then analyzed for total organic carbon content. It is preferred that the total volatile organic carbon content of the vegetable material is at least 100 mg per kg of the dry weight of the vegetable material. The total volatile organic carbon content of the vegetable material is preferably greater than 150 mg per kg of the dry weight of the vegetable material, more preferably greater than 200 mg per kg of the dry weight of the vegetable material. The total volatile organic carbon content of the vegetable material is preferably less than 10000 mg per kg of the dry weight of the vegetable material.

### The step (a)

The step (a) is the step of contacting the vegetable material with a gas in a dryer. Vegetable material may be contacted with any gas.

The gas is preferably air or nitrogen or carbon dioxide, or a mixture thereof.

It is preferred that the temperature of the gas in the step (a) is greater than 30 °C. The temperature of gas is preferably at least 40 °C, more preferably at least 75 °C, and most preferably at least 100 °C. The temperature of gas is preferably less than 300 °C, more preferably less than 200 °C, and most preferably less than 150 °C.

The step (a) is carried out at absolute pressure of preferably from 0.5 to 5 atm, more preferably from 0.9 to 3 atm and most preferably from 0.95 to 1.2 atm. The step (a) is carried out at absolute pressure of preferably from 0.051 to 0.51 MPa, more preferably from 0.091 to 0.31 MPa and most preferably from 0.096 to 0.12 MPa. Pressure close to atmospheric pressure (about 0.1 MPa) is particularly preferred.

The dryer is any equipment that has a chamber for contacting the gas with the vegetable material and an outlet for dryer exhaust gases. Preferably the dryer has an inlet for bringing the gas into the dryer. Any suitably drying equipment can be used. Preferred dryer includes air dyrer such as tray dryers and fluidized bed dryers.

Dryer may be a batch dryer or a continuous dryer.

The temperature of the gas entering the dryer is preferably from 30 °C to 300 °C more preferably from 40 °C to 250 °C and most preferably from 100 °C to 160 °C.

The amount of the moisture in the gas entering the dryer is less than 15 g/kg dry gas, more preferably less than 10 g/kg dry gas, and most preferably less than 5 g/kg dry gas. The amount of the moisture in the gas entering the dryer is preferably greater than 0.01 g/kg dry gas.

Preferably the quantity of the gas contacted with the vegetable material in the step (a) is from 10 to 1200, more preferably from 25 to 800 and most preferably from 40 to 500 kg/kg dry weight of the vegetable material.

### The step (b)

The step (b) is the step of contacting the dryer exhaust gas stream with water vapour or steam to obtain a gaseous mixture.

The term "steam or water vapour" as used herein means a gaseous substance comprising at least 50% evaporated water by mass, more preferably at least 90% evaporated water by mass and most preferably at least 95% evaporated water by mass. It is particularly preferred that "water vapour or steam" is a gaseous substance substantially comprising evaporated water.

The step (b) is preferably carried out outside the dryer.

The temperature of the water vapour or steam is from 95°C to 120 °C.
The absolute pressure of the water vapour or stream is preferably from 0.3 to 7 atm , more preferably from 0.5 to 2 atm and most preferably from 0.8 to 1 atm. The absolute pressure of the water vapour or stream is preferably from 0.0304 MPa to 0.71 MPa, more preferably from 0.051 MPa to 0.202 MPa atm and most preferably from 0.081 MPa to 0.101 MPa.

The amount of the water vapour or steam added per kg of the gaseous mixture is preferably from 1 g to 500 g, more preferably from 5 to 200 g and most preferably from 10 to 100 g.

### The step (c)

The step (c) is the step of condensing the gaseous mixture to recover a condensate comprising volatile aroma compounds. The step (c) may be carried out by using any condenser.

Suitable condenser that can be used includes, for example, shell and tube type, coiled type, tubular type, spiral type and finned tube type condenser. The temperature of the cooling water is preferably below 40 °C, more preferably below 10 °C and most preferably below -5 °C.

The condensation may be single stage or multistage. However single stage condensation is preferred. Without wishing to be limited by theory, it is believed that recovery of aroma volatiles in single stage condensation is higher than that obtained in multistage condensation.

The condensate comprises recovered volatile aroma compounds and water. The amount of volatile aroma compounds is typically from 0.02 to 5 g per kg dry weight of the vegetable material. however this depends upon the choice of vegetable material and the amount of moisture removed.

The concentration of aroma volatile compounds in the condensate is preferably from 1 to 500 ppm of water, more preferably from 5 to 400 ppm of water, and most preferably from 12 to 200 ppm of water.

The condensate may be further concentrated by various methods known to a person skilled in the art in order to increase the concentration of volatile aroma condensate. The preferred methods of further concentration of aroma condensate include distillation, phase separation, adsorption, desorption and membrane separation.

The aroma condensates obtained from the above mentioned process may be used directly or preferably in concentrated form or in encapsulated form by adding to any product for imparting/enhancing flavour and aroma.

### The dried vegetable material

The term dried vegetable material as used herein means the vegetable material left at the end of the step (c). The dried vegetable material has moisture content that is less than the vegetable material in the step (a).

The dried vegetable material comprises less than 3 kg, more preferably less than 2 kg, and most preferably from less than 1 kg moisture per kg dry weight of the vegetable material.

### EXAMPLES

The invention will now be demonstrated with examples. The examples are for the purpose of illustration only and do not limit the scope of the invention in any manner

### Effect of steam injection

The experiments were conducted by contacting the 180 g of black tea leaf (sourced from Kenya) as a vegetable material with air. The air entering the dryer was at temperature of 110 °C and the moisture content of 11 g/kg dry air. The vegetable material contained 2.33 kg moisture/ kg of dry weight of vegetable material. The flow rate of air entering the dryer was 3.2 kg/hr. Total amount of air contacted was 40 kg/kg of dry weight of vegetable material. The dryer exhaust consisted of air stream with carryover of aroma volatiles and moisture released from the vegetable material during drying. Steam at a temperature of 100 °C and at a rate of 96 g/hour was injected in the dryer exhaust air stream to generate the gaseous mixture. The amount of added steam was 30 g per kg of the gaseous mixture. The gaseous mixture was fed into a spiral condenser supplied with chilled water at 2 °C. The air flow and steam injection were stopped after 40 minutes. The condensate was analysed using TOC meter (Shimadzu Model 5000A) to obtain TOC values which was taken to be the amount of volatile aroma compounds. From this the amount of aroma (expressed as mg/kg dry weight vegetable material as well as concentration of volatile aroma compounds in condensate (ppm water) were calculated. The dried vegetable material contained 0.72 kg moisture per kg dry weight of vegetable material. Another experiment was conducted in a manner identical to the one described above except that there was no steam injection. The results of the experiments are reported below

**Table 1a: Effect of steam injection (Tea)**

| Steam injection step | Amount of volatile aroma compounds recovered (mg/kg dry weight material) | Concentration of Volatile aroma compounds in condensate (ppm) |
|---|---|---|
| Without steam injection | 40 | 38 ppm |
| With steam Injection | 100 | 33 ppm |

From the results, it is clear that the process of the present invention (with steam injection) provides relatively higher recovery of volatile aroma compounds without significantly decreasing the concentration of the volatile aroma compounds in the condensate,

### Aroma recovery from Basil

Similar Experiments were carried out with Basil. Experimental details are given below: Total amount of vegetable material: 160 g
Amount of moisture in vegetable material: 9 kg/kg dry weight of the vegetable material
Amount of moisture in the dried vegetable material: 1.63 kg per kg of dry weight of the vegetable material.
Air flow rate entering the dryer: 3.2 kg/hr
Steam injection rate: 180 g/hr
Steam temperature: 100 °C
The amount of added steam was 56 g per kg of the gaseous mixture.
Air flow and Steam Injection was stopped after 60 minutes.
The results of the experiments (with and without steam injection) are reported below

**Table 1 b: Effect of steam injection (Basil)**

| | Amount of volatile aroma compounds recovered (mg/kg dry weight material) | Concentration of Volatile aroma compounds in condensate (ppm) |
|---|---|---|
| Without steam injection | 700 | 130 |
| With steam injection | 1350 | 65 |

From the results, it is clear that the process of the present invention (with steam injection) provides relatively higher recovery of volatile aroma compounds. Concentration of the volatile aroma compounds in the condensate in slightly low, but acceptable.

### Effect of temperature

All experiments below were run for 60 minutes. The experiment was carried out with basil. Experimental conditions are given below.
Air Flow rate entering the dryer: 4.5 kg/hr
Steam injection rate: 180 g/hr.
The inlet air temperature into the dryer bed was varied as tabulated below along with the results.

**Table 2: Effect of temperature**

| Temperature of air at inlet of dryer | Amount of volatile aroma compounds recovered (mg/kg dry weight material) | Concentration of Volatile aroma compounds in condensate (ppm) |
|---|---|---|
| 110 | 801 | 56 |
| 60 | 407 | 33 |
| 32 | 341 | 31 |

From the results, it is clear that the recovery of aroma compounds increases with the increase in the drying temperature of inlet air into the dryer.

### Effect of the amount of steam added per kg of the gaseous mixture

All experiments below were run for 60 minutes. The experiments were carried out with basil. Experimental conditions are given below.
Air Flow rate entering the dryer: 4.5 kg/hr
The inlet air temperature into the bed: 110 °C.
Amount of steam added was varied as tabulated below along with the results.

**Table 3: Effect of the amount of steam added per kg of the gaseous mixture**

| Amount of steam (g) added per kg of gaseous mixture | Amount of volatile aroma compounds recovered (mg/kg dry weight material) | Concentration of Volatile aroma compounds in condensate (ppm) |
|---|---|---|
| 7 | 480 | 88 |
| 40 | 800 | 56 |
| 78 | 920 | 40 |

From the results, it is clear that the recovery of aroma compounds increases with the amount of steam added per kg of gaseous mixture. Although this is accompanied by some reduction in the concentration of volatile aroma compounds in the condensate, it is preferred that the amount of steam added per kg of gaseous mixture is relatively higher.

### Comparartive data when dryer exhaust is contacted with water

Following experiment was conducted under similar conditions as those in Table 1 b except that the dryer exhaust was bubbled through liquid water instead of injecting steam.

**Table 4: Comparartive data when dryer exhaust is directly contacted with water**

| Amount of WATER (g) contacted with the gaseous mixture per kg of gaseous mixture | Amount of volatile aroma compounds recovered (mg/kg dry weight material) | Concentration of Volatile aroma compounds in condensate (ppm) |
|---|---|---|
| 1400 | 875 | 10 |
| 350 | 250 | 11 |
| 100* | - | - |

| | | |
|---|---|---|
| * Not possible to collect volatile aroma compounds due to splashing and loss of water. | | |

It was found that when the amount of water used is relatively low, the recovery of volatile compounds was very low, and when higher amount of water was used the concentration of volatile aroma compounds in water was relatively too low. This indicates that the process of the present invention of steam injection provides significantly better results as compared to the prior art processes wherein dryer exhaust is directly contacted with liquid water.

## Claims

1. A process for the recovery of volatile aroma compounds from a vegetable material comprising the steps of:
a. Contacting the vegetable material with a gas in a dryer wherein the amount of moisture in the gas entering the dryer is less than 15 g/kg dry gas;
b. Contacting the dryer exhaust gas stream with water vapour or steam which comprises at least 50% evaporated water by mass to obtain a gaseous mixture; wherein the temperature of the water vapour or steam is from 95°C to 120°C; and;
c. Condensing the gaseous mixture to recover a condensate comprising volatile aroma compounds.

2. A process as claimed in claim 1 wherein the gas is at temperature greater than 30°C in the step (a)

3. A process as claimed in claim 1 or claim 2 wherein said step (a) is at an absolute pressure of 0.051 to 0.51 MPa.

4. A process as claimed in anyone of the preceding claims wherein step (c) is a single stage condensation.

5. A process as claimed in anyone of the preceding claims wherein said vegetable material is selected from a group consisting of tea (*Camellia sinensis*), basil (*Ocimum basilicum, Ocimum sanctum, Ocimum ten uiflorum*) , parsley (*Petroselinum crispum*), capsicum and chillies (Capsicum annum, Capsicum fruitenscens), carrot (*Oaucus carota*), asparagus (*Asparagus Racemosus*), broccoli (*Brassica o*/*eracea var.* /*talica*), cinnamom (*Cinnamomum aromaticum, Cinnamomum* tama/a, *Cinnamomum zey*/*ancium*) Curcumin (*Curcu*ma /onga), Cardamomd (E/ettaria cardamomum), Vanilla (Vanilla fragrans), ginger (Zinziber officinalis), Coriander (Coraindrum sativum*),* strawberry (*Fragaria vesca*), *Allium cepa* (onion), *Allium sativum* (garlic) and *Cuminum cyminum.*

6. A process as claimed in anyone of the preceding claims wherein the temperature of gas in the step (a) is less than 300 °C.

7. A process as claimed in anyone of the preceding claims wherein the amount of the water vapour or steam added is from 1 g to about 500 g per kg of the gaseous mixture.

## Patentansprüche

1. Verfahren für die Gewinnung von flüchtigen Aromaverbindungen aus einem pflanzlichen Material, umfassend die Schritte:
a. In-Kontakt-Bringen des pflanzlichen Materials mit einem Gas in einem Trockner, wobei die Feuchtigkeitsmenge in dem Gas, das in den Trockner eintritt, weniger als 15 g/kg trockenes Gas ist;
b. In-Kontakt-Bringen des Trockner-Abgasstromes mit Wasserdampf oder Dampf, der wenigstens 50 Massen-% verdampftes Wasser umfasst, unter Erhalt eines gasförmigen Gemisches; wobei die Temperatur des Wasserdampfes oder Dampfes 95 °C bis 120 °C ist, und
c. Kondensieren des gasförmigen Gemisches, um ein Kondensat zu gewinnen, das flüchtige Aromaverbindungen umfasst.

2. Verfahren, wie es in Anspruch 1 beansprucht ist, wobei das Gas in Schritt (a) eine Temperatur von höher als 30 °C hat.

3. Verfahren, wie es in Anspruch 1 oder Anspruch 2 beansprucht ist, wobei der Schritt (a) bei einem absoluten Druck von 0,051 bis 0,51 MPa ist.

4. Verfahren, wie es in einem der vorangehenden Ansprüche beansprucht ist, wobei Schritt (c) eine Einstufenkondensation ist.

5. Verfahren, wie es in einem der vorangehenden Ansprüche beansprucht ist, wobei das pflanzliche Material aus einer Gruppe, bestehend aus Tee (Camellia sinensis), Basilikum (Ocimum basilicum, Ocimum sanctum, Ocimum tenuiflorum), Petersilie (Petroselinum crispum), Paprika und Peperoni (Capsicum annum, Capsicum fruilenscens), Karotte (Oaucus carota), Spargel (Asparagus racemosus), Brokkoli (Brassica olaracea var. Italica), Zimt (Cinnamomum aromaticum, Cinnamomum tamala, Cinnamomum zeylancium), Curcumin (Curcuma longa), Kardamom (Elettaria cardamomum), Vanille (Vanilla fragrans), Ingwer (Zinziber officinalis), Koriander (Coraindrum sativum), Erdbeere (Fragaria vesca), Allium cepa (Zwiebel), Allium sativum (Knoblauch) und Cuminum cyminum, ausgewählt ist.

6. Verfahren, wie es in einem der vorangehenden Ansprüche beansprucht ist, wobei die Temperatur des Gases in Schritt (a) niedriger als 300 °C ist.

7. Verfahren, wie es in einem der vorangehenden Ansprüche beansprucht ist, wobei die Menge des Wasserdampfes oder Dampfes, die zugeführt wird, 1 g bis etwa 500 g pro kg des gasförmigen Gemisches ist.

## Revendications

1. Procédé de récupération de composés aromatiques volatils à partir d'une matière végétale comprenant les étapes :
a. mettre en contact la matière végétale avec un gaz dans un sécheur dans lequel la quantité d'humidité dans le gaz entrant dans le sécheur est inférieure à 15 g/kg de gaz sec ;
b. mettre en contact le courant de gaz d'échappement du sécheur avec de la vapeur d'eau ou de la vapeur qui comprend au moins 50 % d'eau évaporée en masse pour obtenir un mélange gazeux ; dans lequel la température de la vapeur d'eau ou de la vapeur est de 95 °C à 120 °C ; et ;
c. condenser le mélange gazeux pour récupérer un condensat comprenant des composés aromatiques volatils.

2. Procédé selon la revendication 1 dans lequel le gaz est à une température supérieure à 30 °C dans l'étape (a).

3. Procédé selon la revendication 1 ou la revendication 2 dans lequel ladite étape (a) est à une pression absolue de 0,051 à 0,51 MPa.

4. Procédé selon l'une quelconque des revendications précédentes dans lequel l'étape (c) est une condensation en une seule étape.

5. Procédé selon l'une quelconque des revendications précédentes dans lequel ladite matière végétale est choisie dans un groupe constitué du thé (Camellia sinensis), du basilic (Ocimum basilicum, Ocimum sanctum, Ocimum ten uiflorum), du persil (Petroselinum crispum), du capsicum et du poivron (Capsicum annum, Capsicum fruitenscens), de la carotte (Oaucus carota), de l'asperge (Asparagus Racemosus), du brocoli (Brassica oleracea var. Italica), de la cannelle (Cinnamomum aromaticum, Cinnamomum tamala, Cinnamomum zeylancium), de la curcumine (Curcuma longa), de la cardamome (Elettaria cardamomum), de la vanille (Vanilla fragrans), du gingembre (Zinziber officinalis), de la coriandre (Coriandrum sativum), de la fraise (Fragaria vesca), de l'Allium cepa (oignon), de l'Allium sativum (ail) et du Cuminum cyminum.

6. Procédé selon l'une quelconque des revendications précédentes dans lequel la température du gaz dans l'étape (a) est inférieure à 300 °C.

7. Procédé selon l'une quelconque des revendications précédentes dans lequel la quantité de la vapeur d'eau ou de la vapeur ajoutée est de 1 g à environ 500 g par kg du mélange gazeux.
